(19) Europäisches Patentamt
European Patent Office
Office européen des brevets

(11) Publication number : 0 338 845 B1

(12) EUROPEAN PATENT SPECIFICATION

(45) Date of publication of patent specification : 07.09.94 Bulletin 94/36

(51) Int. Cl.$^5$ : G02F 1/35, C09K 19/38, C08L 67/00

(21) Application number : 89303970.1

(22) Date of filing : 21.04.89

# (54) Nonlinear optical materials.

(30) Priority : 21.04.88 JP 96766/88

(43) Date of publication of application : 25.10.89 Bulletin 89/43

(45) Publication of the grant of the patent : 07.09.94 Bulletin 94/36

(84) Designated Contracting States : DE GB

(56) References cited :
EP-A- 0 232 138
EP-A- 0 306 339
DERWENT FILE SUPPLIER, WPIL; & JP-A-1 090 414
MACROMOLECULES, vol. 15, 1982, pages 1385-1389, American Chemical Society; G.R.MEREDITH et al.: "Optical and nonlinear optical characterization of molecularly doped thermotropic liquid crystalline polymers"

(73) Proprietor : NIPPON OIL CO., LTD.
1-3-12, Nishishimbashi
Minato-ku
Tokyo (JP)

(72) Inventor : Itoh, Hiroyuki
2-228, Kosugi-cho
Nakahara-ku
Kawasaki-shi Kanagawa-ken (JP)
Inventor : Ishii, Takafumi
155-72, Honmokuosato-cho
Naka-ku
Yokohama-shi Kanagawa-ken (JP)
Inventor : Toyooka, Takehiro
58-179, Honmokumoto-machi
Naka-ku
Yokohama-shi Kanagawa-ken (JP)
Inventor : Satoh, Tetsuo
2-12-2, Denenchofu
Ota-ku
Tokyo (JP)

(74) Representative : Cropp, John Anthony David et al
MATHYS & SQUIRE
10 Fleet Street
London, EC4Y 1AY (GB)

EP 0 338 845 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

The present invention relates to nonlinear optical materials having a high nonlinear optical constant useful as a frequency doubler of laser beams and the like.

Nonlinear optical materials have actively been investigated as the important technology for optoelectronics in such fields as frequency doublers of laser beams, optical modulators, optical switches and optical computers. Well known examples of nonlinear optical materials are lithium niobate, potassium dihydrogen phosphate and the like. Unlike these inorganic materials, there have been obtained no crystals of organic materials having a macroscopic second order hyperpolarizability large enough to permit practical use, although they possess superior characteristics such as a nonclear optical constant 100 - 1000 times as high, response at a higher speed and stronger resistance to optical damages. In many cases, even when the constructing molecule itself has a large secondary molecular susceptibility, the macroscopic second order hyperpolarizability will be zero in the crystalline state due to its inversion symmetry with a result that there will be no optical secondary harmonic generation (SHG). As stated above, it is difficult to provide a single crystal with no center of symmetry by the use of a low-molecular organic substance alone. Therefore, there have been proposed methods in which such organic molecules are dispersed in a matrix of a macromolecular compound and the host macromolecules are oriented by the aid of external field such as electric field simultaneously allowing for unsymmetric orientation of the guest organic molecules. For example, SHG is observed by blending 4-dimethylamino-4'-nitrostilben (DANS) in a nematic liquid crystalline macromolecule and then applying electric field to the blend to cause orientation [G.R. Meredith, Macromolecules, 15(5), 1385(1982)]. In this method, however, as the DANS can be blended in a concentration as low as 2% at highest, and orientating force of the host macromolecular liquid crystals is not satisfactorily high, there is produced an unsatisfactory nonlinear optical constant several times as high as that of urea. Japanese Patent Laid-open No. 238538/1987 also describes an observation of an SHG of 0.53 μm by incidence of $Nd^{3+}$/YAG laser beam upon a film prepared from a composition of DANS dispersed in thermotropic macromolecular liquid crystals of main chain type. Also, in EP No. 244288 are described synthesis of a liquid crystalline polymer of side-chain type in which a mesogen and a unit exerting nonlinear optical response have been linked to the side chain of a polymer such as polyacrylate, polymethacrylate or polysiloxane and orientation of a film from the polymer by applying an electric field followed by incidence of $Nd^{3+}$/YAG laser beam by which an SHG of 0.53 μm is observed. The methods described in these literatures are commonly characterized by the use of a matrix polymer which is the nematic liquid crystalline polymer of a substance having inherently a symmetrical center since a unit exerting nonlinear response is orientated asymmetrically and consequently have a critical disadvantage that a material with a nonlinear optical constant sufficiently high for practical use cannot be produced.

Another disadvantage of the method using nematic liquid crystalline polymer is that use of nematic liquid crystalline polymer produces no benefit in the phase matching which is technologically important for practical use, and utilization of conventional birefrigence or optical waveguide is necessary.

### Summary of the Invention

It is an object of the invention to overcome the critical disadvantage of the prior arts for producing nonlinear optical materials by utilizing the orientation field of nematic liquid crystalline polymers. The inventors have found that novel nonlinear optical materials having a very large nonlinear optical constant and easily undergoing phase matching can be obtained by utilizing the asymmetrical orientation field of chiral smectic liquid crystalline polymer. The present invention is based upon the above finding.

The present invention resides in nonlinear optical materials comprising a chiral smectic C liquid crystalline polyester consisting essentially of the structural units having the general formulae (A), (B) and (C);

(A)

$$-\overset{\overset{O}{\|}}{C}-X-\overset{\overset{O}{\|}}{C}-$$

40-60 mol%

wherein X is a structural unit selected from the group consisting of

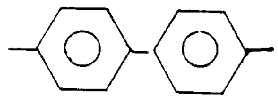 , 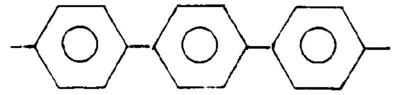 ,

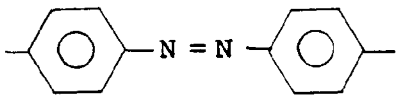 , 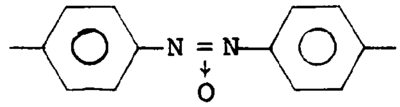 ,

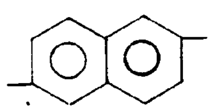 , 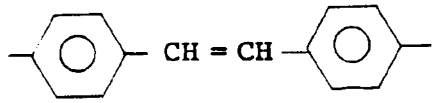 ,

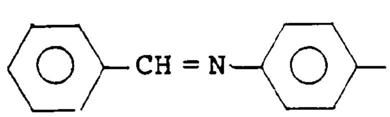 , 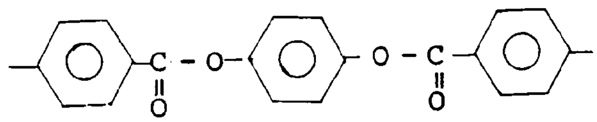 ,

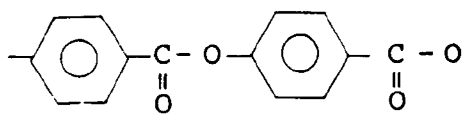

and

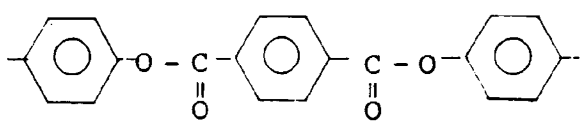 ,

(B)

$$- O - Y - O -$$

1-60 mol%

wherein Y is a group having at least one optically active carbon and the total carbon number of Y is 3-12.

(C)

$$- O \{ CH_2 \}_n O -$$

0-50 mol%

wherein n is an integer of 2-10, with the proviso that when X is biphenyl, Y is not derived from 2-methyl-1,4-butanediol, 2-ethyl-1,4-butanediol, 2-propyl-1; 4-butanediol or a derivative thereof, and optionally a compound exerting a nonlinear optical response.

According to a second aspect of the present invention there is provided a process for producing a nonlinear optical material which comprises maintaining the composition of the above first aspect within a temperature range at which the composition exhibits chiral smectic C phase for 1 minute to 20 hours and applying a shearing force to the composition in the form of film so as to orient the molecules parallel with the film surface and then cooling the composition.

## Detailed Description of the Invention

The present invention will be described in detail hereinafter.

The structural unit (A) having the general formula

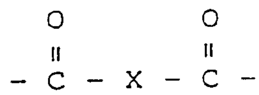

is a unit acting as a mesogen. X is a structural unit selected from the group consisting of

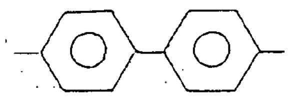 , 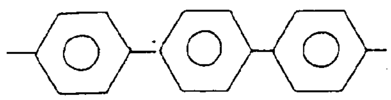 ,

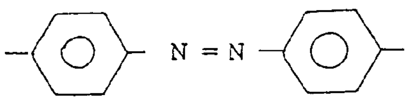 , 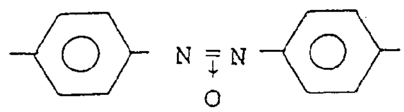 ,

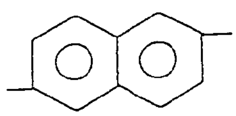 , 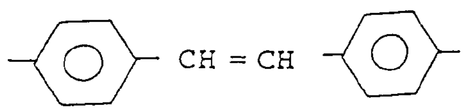 ,

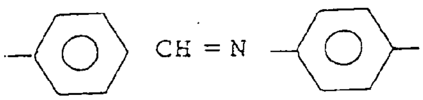 , 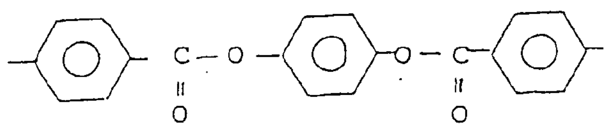 ,

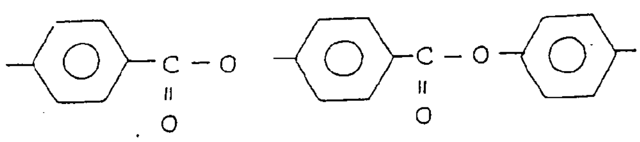

and

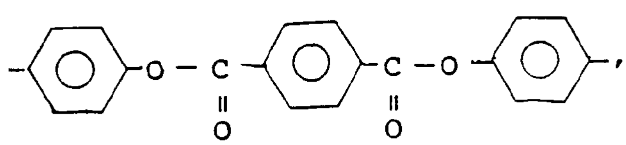 ,

and preferably a structural unit selected from the group consisting of

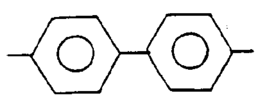 , 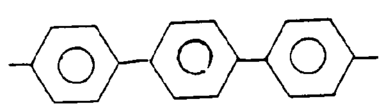 ,

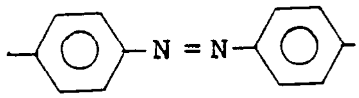 , 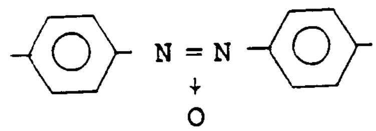 ,

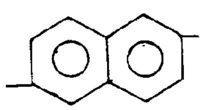 and 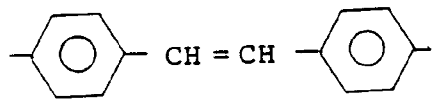 .

The structural unit (A) is usually derived from a dicarboxylic acid of HOOC-X-COOH or a derivative thereof such as dialkyl ester (e.g., diethyl ester). The structural unit (A) is present in a proportion of 40-60 mol%, preferably 45-55 mol% and most preferably about 50 mol% in the polymer.

The structural unit (B) is a unit which is an optically active component whereby the polyester of the invention exhibits a chiral smectic C liquid crystalline phase. Y is a group having carbon number 3-12, at least one of which being optically active. Examples of Y unit include

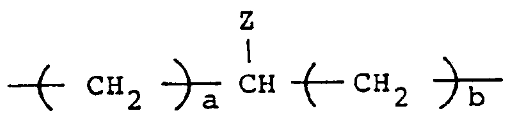

wherein each of a and b is an integer of 0-10, the sum of a and b is in the range of 2-11, a does not equal to b, and Z is a group selected from the group consisting of C1-3 alkyl, F, Cℓ and Br. Preferable examples are

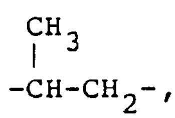 , 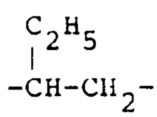 , 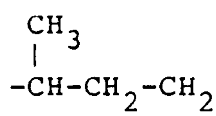

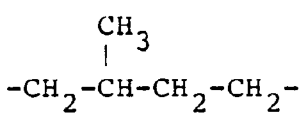 , 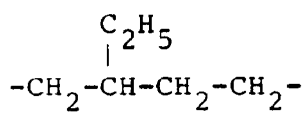 ,

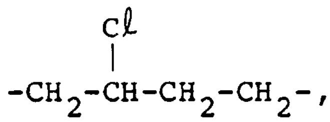 , 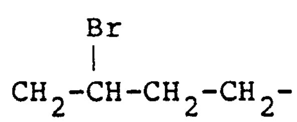 ,

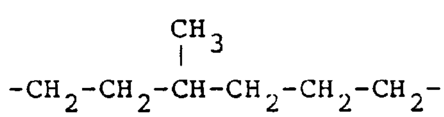 and 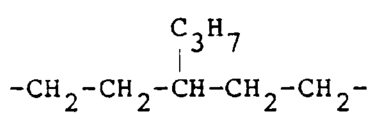 .

The unit (B) is derived from a corresponding diol or a derivative thereof such as diacetylated compound. There may be used either R or S isomer, or a mixture thereof. When the mixture is used, the difference in content between R and S isomers should be greater than 1%, preferably greater than 10%, most preferably greater than 20%. When the difference is smaller than 1%, the temperature range for forming a chiral smectic C phase is too narrow. The structural unit (B) is present in a proportion of 1-60 mol%, preferably 10-50 mol%. When

the structural unit is present in a proportion smaller than 1%, the temperature range for forming a chiral smectic C phase is too narrow.

The structural unit (C) is a component for controlling such conditions as transition temperature, temperature range and viscosity when the polyester is forming a chiral smectic C phase. The number of n and the amount may be selected depending upon the properties of the desired polymer. The structural unit (C) is present in a proportion of 0-50 mol%. The preferable amount is 5-40 mol% in view of control of physical properties. In the formula, n is an integer of 2-10, preferably 4-8. When n is 1 or larger than 10, there are some cases where no liquid crystal is formed. The structural unit (C) is derived from a corresponding α, ω-diol or a derivative thereof such as diacetylated derivative).

The chiral smectic C liquid crystalline polyester of the invention can be prepared by a known melt-polymerization or solution polymerization process. It goes without saying that the ratio of the amounts of the monomers is selected so that the total of the acid components is almost equimolar to that of the diol components. For example, predetermined amount of biphenyl-4,4′ dicarboxylic acid diethyl ester, an optically active 2-alkyl-1,4-butane diol and an α, ω-alkanediol may be reacted at a high temperature and under high vacuum to yield a polyester. The molecular weight may be adjusted by controlling the polymerization time. In order to accelerate the polymerization there may be used known catalysts, such as alkali metal salts or metallic salts of Fe, Mn, Cd, Mg, Ba, Ti, Zn, Pb, Co, Sb, and Sn alone or in combination. Phosphorus compounds may also be added as decomposition inhibitors.

In the nonlinear optical materials of the invention, the chiral smectic C liquid crystalline polyesters have no symmetrical center therein and therefore exert a nonlinear optical response by themselves. However, it is preferable to use them in combination with other compounds exerting a nonlinear optical response in order to produce more efficient nonlinear optical materials.

The compounds exerting a nonlinear optical response (referred to as NLO) are those having a secondary molecular susceptibility larger than $1 \times 10^{-30}$ esu, preferably larger than $10 \times 10^{-30}$ esu. The larger the secondary molecular susceptibility, the better. Generally, polarization μ which occurs in an organic compound is expressed as

$$\mu = \alpha E + \beta E \cdot E + \gamma E \cdot E \cdot E + \ldots$$

In the equation E is an outer electric field and α, β, γ ... are respectively primary, secondary, tertiary ... molecular susceptibilities. In the above, the secondary molecular susceptibility means the value β in the above equation.

As the preferable NLO compounds are mentioned urea derivatives, enone derivatives, nitroaniline derivatives, a variety of heterocyclic compounds, stilben derivatives, etc.

As examples of the urea and enone derivatives are mentioned

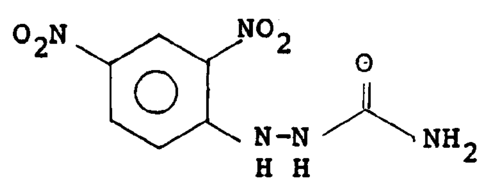

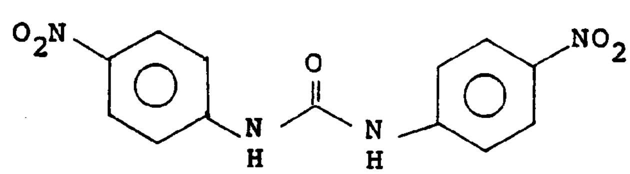

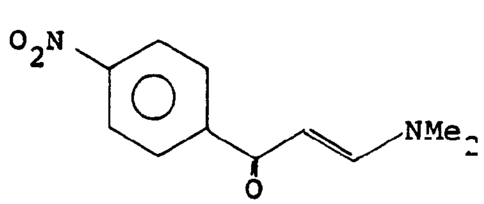

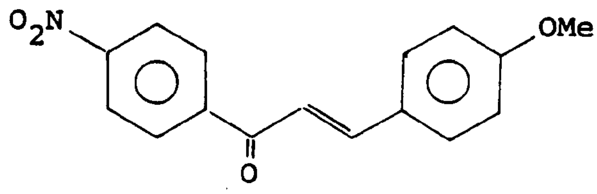

As the nitroaniline derivatives are mentioned

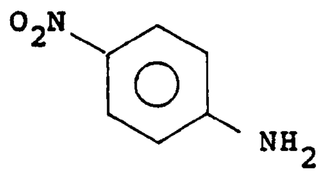

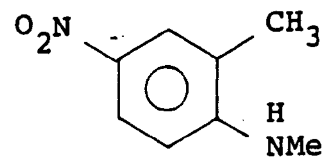

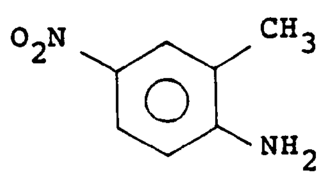

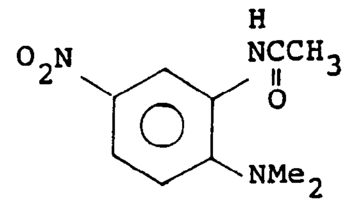

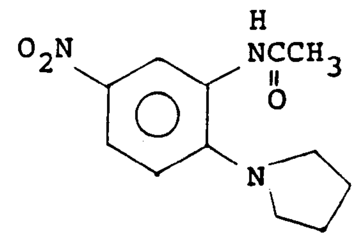

and the like. As examples of the heterocyclic compound are mentioned

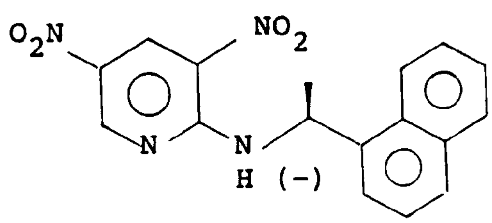

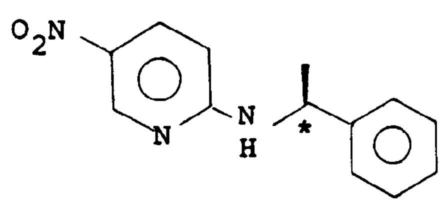

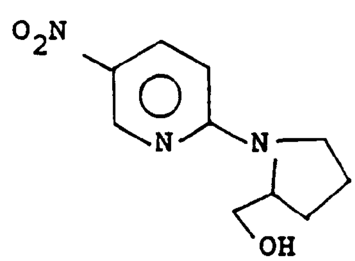

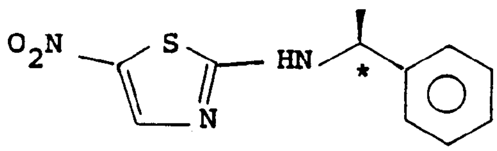

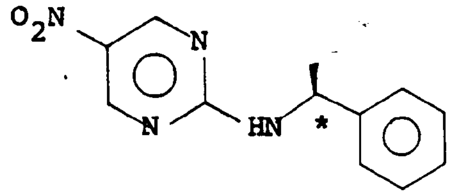

As examples of the stilben derivative are mentioned

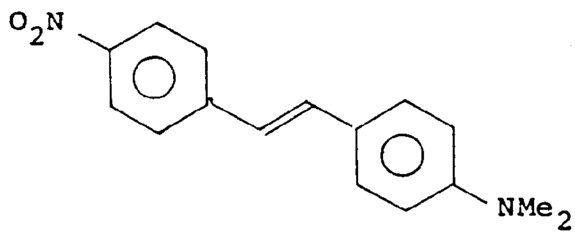

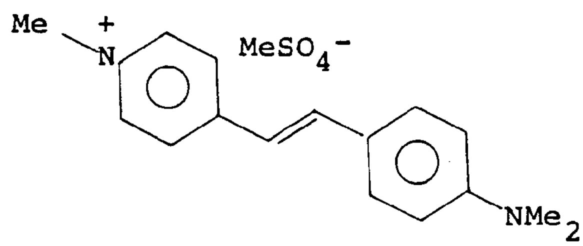

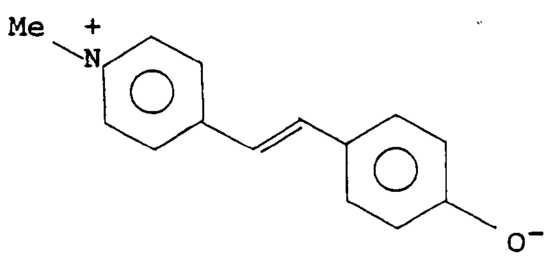

Whereas these compounds are examples of the compound that can be used in the invention, it is known that compounds with the conjugated $\pi$ electron system and being highly polarized have a large secondary molecular susceptibility, and any compound, even if not illustrated above, may be used in the invention provided that it has a secondary molecular susceptibility larger than $1 \times 10^{-30}$ esu.

It is preferred that the NLO compound is contained in the range of 1 to 50%, most preferably 5 to 30% by weight in the chiral smectic C liquid crystalline polyester.

If the content of the NLO compound is less than 1% by weight, conversion efficiency of the incident light to the secondary harmonics will be too small to be practicable, and if it is more than 50% by weight, amount of the guest compound relative to the host polymer will be too large to yield orientation sufficient to give a practicable nonlinear optical response.

Then, methods for preparing the nonlinear optical materials of the invention will be described below. The materials of the invention may be in various forms such as sheet, film and thin film when used as a nonlinear

optical component.

A chiral smectic C liquid crystalline polyester and a NLO compound are homogeneously dissolved in a common solvent and the solvent is evaporated to obtain a homogeneous composition. The common solvent is not particularly limited so long as both components can be homogeneously dissolved therein. Adequate solvent is variable depending upon nature of the NLO compound, nature of the polymer and nature of the combination of the both components. Illustrative particular examples include halogen-based solvents, such as dichloroethane, tetrachloroethane, trichloroethylene, tetrachloroethylene and orthodichlorobenzene, phenolic solvents such as phenol, pentachlorophenol and pentafluorophenol, polar solvents such as tetrahydrofuran dimethylformamide, dimethylacetamide and N-methylpyrrolidone and the like. Then, the composition is heated and maintained in a molten state. The temperature of the molten composition is variable depending upon nature of the composition, but usually in the range of 50 to 300°C, preferably 70 to 250°C.

After the composition is maintained in a temperature range in which it is in the chiral smectic C phase usually for 1 minute to 20 hours, a shearing force is applied to the composition to orient the molecules in parallel with the film surface. Then the sufficiently oriented chiral smectic C phase is fixed by cooling. The polyester used in the invention is in the cholesteric or smectic phase in a temperature range higher than that in which it is in the chiral smectic C phase. When the composition is kept in a temperature range in which it is in the cholesteric phase or smectic A phase, the temperature is then somewhat lowered to age it in the chiral smectic C phase, a shearing force is applied to the composition to orientate the molecule in parallel with the film surface and it is cooled to fix the sufficiently oriented chiral smectic C phase. The cooling rate varies depending on the temperature range for chiral smectic C phase; that is, the cooling rate varies depending on the optically active component content. However, since the temperature range in which the polyester of the invention is in the chiral smectic C phase is quite wide, the chiral smectic C liquid crystal structure can be easily fixed by leaving the film surface to cool to a temperature lower than the transition temperature of the chiral smectic C phase without requiring any special operation.

The easy fixation is one of the great characteristic features of the invention.

The materials produced by fixing the chiral smectic C liquid crystal phase containing a NLO compound in accordance with the process of the invention as mentioned above can be used as nonlinear optical materials without any addition treatment. In other words, since chiral smectic C liquid crystals have no symmetrical center, unlike nematic liquid crystals, the NLO compound oriented in the asymmetric orientation field of the chiral smectic C liquid crystal has also an asymmetrically oriented structure and as a result, the produced material exerts a nonlinear optical response. As mentioned above, it is one of the outstanding characteristic features of the invention that asymmetric orientation of an NLO compound can be achieved only by the orienting force of a host polymer and a nonlinear optical material can be produced without aid of external force such as an electric field. Of course, the satisfactory asymmetrically oriented structure can also be realized by the use of an electric field. For example, a nonlinear optical material with asymmetrically oriented structure fixed can be obtained by heating a composition consisting essentially of a chiral smectic C liquid crystalline polyester and a NLO compound inserted between two transparent electrodes and applying an electric field while maintaining the composition at a temperature exhibiting a chiral smectic C phase to produce asymmetric orientation in the polymer and the NLO compound followed by cooling from the temperature to fix the asymmetrically oriented structure.

Another outstanding characteristic feature of the invention is that it provides a nonlinear optical material which is easily phase-matched. The chiral smectic C liquid crystal, unlike a nematic liquid crystal, is characterized by a helical structure. Unique phase matching is feasible by the use of a periodic field and anisotropy to circularly polarized light different from conventional methods using birefrigence or optical wave guide.

The nonlinear optical materials according to the invention can realize excellent asymmetric orientation characteristic since essentially asymmetrical chiral smectic C liquid crystalline polyesters are used as the base, and as a result high nonlinear susceptibility can be obtained.

The nonlinear optical materials of the invention are applicable to a variety of optoelectronics such as wavelength convertion of laser beams, optical modulation, optical switching and optical computers.

The following examples will be given to further illustrate the invention.

Production example

(Example 1)

(1) Polymer A

Using 5.96g of diethyl biphenyl-4,4′-dicarboxylate, 1.66g of (S)-2-methyl-1,4-butanediol, 1.89g of (enan-

tiotropic excess, e.e.=92%) 1,6-hexanediol and two drops of tetrabutoxy titanium, the reaction was carried out at 185°C for 45 minutes, at 205°C for 10 minutes, at 225°C for 10 minutes and further at 250°C for 20 minutes, and then at 250°C for an hours under higher vacuum of 0.3 mmHg to synthesize polymer A of the following structure.

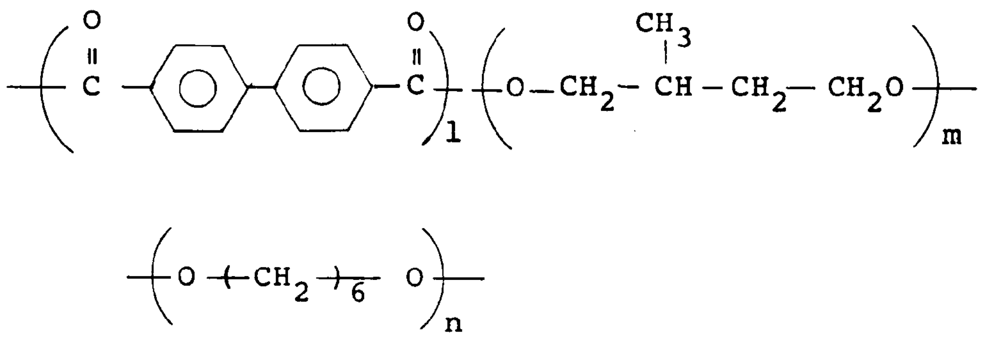

( Z : m : n = 50 : 25 : 25 )

From the results of X-ray diffraction of the polymer A, it was found that a diffraction pattern representing the existence of smectic layer structure is observed, the spacing d at that time decreases along with the lowering of the temperature, and a tilt angle θ of the molecule forming the smectic layer increases together with the lowering of the temperature inversely. Based on these findings, it was also found that the polymer has smectic layer structure, an orientation vector of the molecule forming the smectic layer is tilted and there is correlation between the increase of the tilt angle and the decrease of the spacing among the layers. Thus, the polymer clearly formed smectic C liquid crystal.

By the observation of the polymer A at 170°C using a polarization microscope, a clear retardation line was observed and it was found that the polymer A has a helical period structure. Therefore, the polymer is considered to form smectic C structure and have a helical structure which was observed optically from the results of X-ray diffraction and those of polarization microscope observation, so that it is chiral smectic C liquid crystallinity.

(2) Polymer A + NLO compound

Polymer A as host molecule and p-nitroaniline as NLO compound were dissolved in phenol/tetrachloroethane mixed solvent (weight ratio 60/40) in a ratio of 90% to 10% to prepare a homogeneous solution. Then, the solvent was evaporated from this solution to produce a cast film. This cast film was sandwiched between two polyimide films coated with tefron, interposing with a spacer of aluminum film of 100 μm, and preheated at 170°C for 30 minutes using a bench press. Then, maintaining the same temperature, pressing was carried out slowly increasing the pressure, and they were taken out of the press and allowed to be cooled. After removing the polyimide film and the aluminum spacer, $Nd^{3+}$/YAG laser light (λ=1.06μm) was radiated on the resulting film to examine a nonlinear optical response of the film, so that the generation of the second higher harmonics (λ=0.53 μm) was observed.

Other films were prepared repeating the above method except that the temperature was changed to 165°C, 175°C and 180°C, and 4 samples including the above film treated at 170°C were determined to the strength of the second higher harmonics and were found to have different values. This means that the helical pitch of the chiral smectic C liquid crystal varies depending on the temperature and the matching of phase takes place.

Example 2

(1) Polymer B

According to Example 1 (1), Using (S)-3-methyl-1,6-hexanediol (e.e.=95%) as an optical active component, polymer B of the following structure was synthesized.

This polymer was found to be chiral smectic C liquid crystallinity from the observation of X-ray diffraction and polarization microscopy.

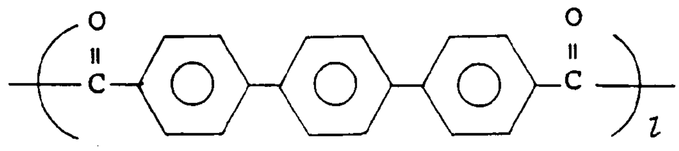

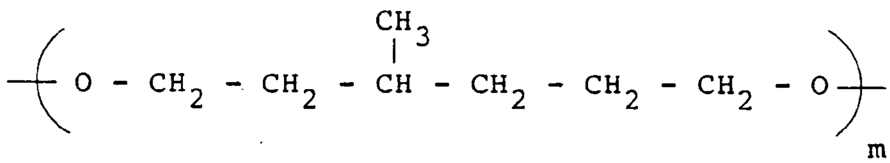

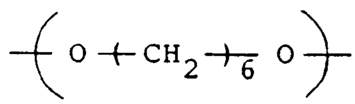

( Z : m : n = 52 : 16 : 32 )

(2) Polymer B + NLO compound

Polymer B as host molecule and 4-dimethylamino-4′-nitrostilbenzene as NLO compound were dissolved in phenol/tetrachloroethane mixed solvent (weight ratio 60/40) in a ratio of 95% to 5% to prepare a homogeneous solution. Then, the solvent was evaporated from this solution to produce a cast film. This cast film was sandwiched between two sheets of glass attached with transparent electrodes, interposing with a spacer of Kapton film of 100 μm, and by heating at 180°C and extending slowly in molten state, the polymer was closely adhered onto the electrodes. Then, maintaining the temperature at 180°C,4 kV/cm of direct current electric field was applied to orientate and a sample was obtained after rapid cooling and solidification. $Nd^{3+}$/YAG laser light (λ=1.06μm) was radiated on the resulting sample to examine a nonlinear optical response of the film, so that the generation of the second higher harmonics (λ=0.53μm) was observed.

Example 3

(1) Polymer C

According to Example 1 (1), Using (R)-2-chloro-1,4-butanediol (e.e=81%) as an optical active component, polymer C of the following structure was synthesized.

Polymer C was found to be chiral smectic C liquid crystallinity from the observation of X-ray diffraction and polarization microscopy.

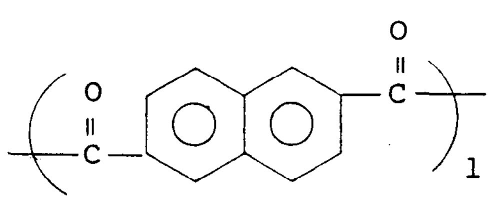

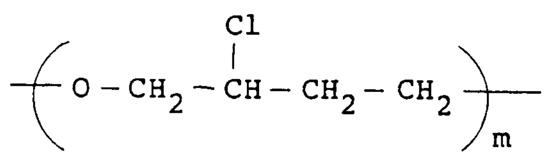

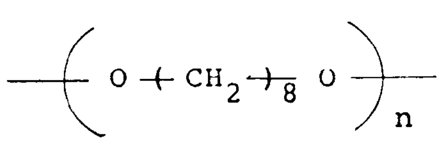

( Z : m : n = 48 : 32 : 20 )

(2) Polymer C + NLO compound

According to Example 1 (1), using Polymer C as host molecule and a compound of the formula;

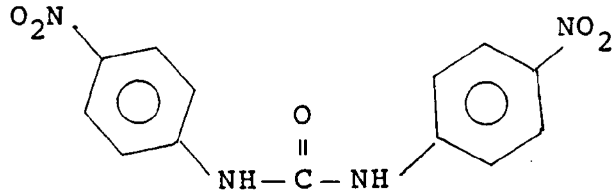

as NLO compound in a ratio of 70% to 30%, a cast film was prepared. Then, this film was finely divided to powder and extruded through a nozzle of a width of 0.5 mm using a T-die extruding molding machine to obtain a film-like material. In order to examine nonlinear optical response of this sample, the determination of the strength of the second higher harmonics was carried out. $Nd^{3+}$/YAG laser light ($\lambda$=1.06$\mu$m) was radiated on the resulting sample, so that the generation of the second higher harmonics ($\lambda$=0.53$\mu$m) was observed.

<u>Example 4</u>

(1) Polymer D

According to Example 1 (1), Using (S)-3-ethyl-1,9-nonanediol (e.e.=64%) as an optical active component, polymer D of the following structure was synthesized.

Polymer D was found to be chiral smectic C liquid crystallinity from the observation of X-ray diffraction and polarization microscopy.

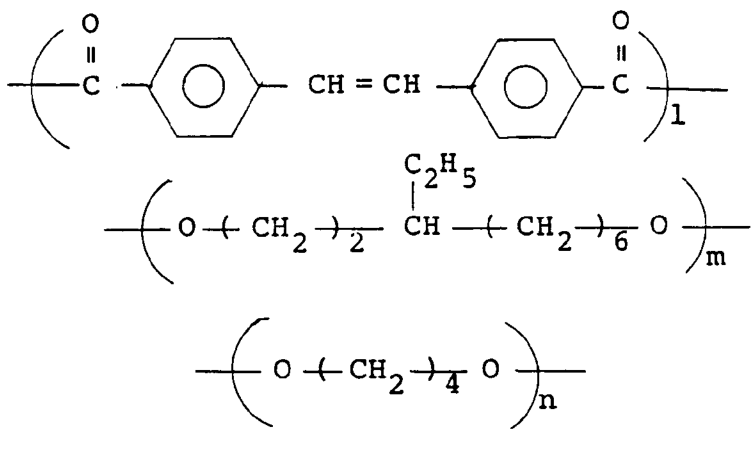

( Z : m : n = 51 : 20 : 29 )

(2) Polymer D + NLO compound

Polymer D as host molecule and 4-dimethylamino-4'-nitrostilbenzene as NLO compound were dissolved in phenol/tetrachloroethane mixed solvent (weight ratio 60/40) in a ratio of 90% to 10% to prepare a homogeneous solution. Then, the solvent was evaporated from this solution to produce a cast film. This cast film was sandwiched between two sheets of glass attached with transparent electrodes, interposing with a spacer of Kapton film of 100 $\mu$m, and by heating at 200°C and extending slowly in molten state, the polymer was closely adhered onto the electrodes. Then, maintaining the temperature at 200°C,4 kV/cm of direct current electric field was applied to orientate and a sample was obtained after rapid cooling and solidification. $Nd^{3+}$/YAG laser light was radiated on the resulting sample to examine a nonlinear optical response of the film, so that the generation of the second higher harmonics ($\lambda$=0.53$\mu$m) was observed.

Example 5

(1) Polymer E

According to Example 1 (1), Using (R)-2-bromo-1,5-pentanediol (e.e.=30%) as an optical active component, polymer E of the following structure was synthesized.

Polymer E was found to be chiral smectic C liquid crystallinity from the observation of X-ray diffraction and polarization microscopy.

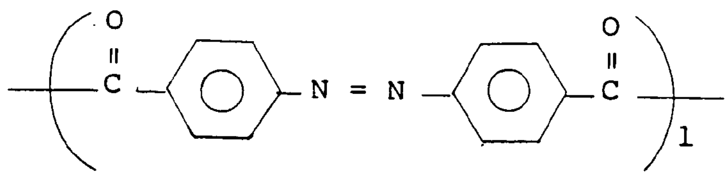

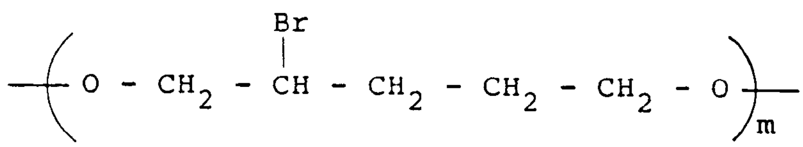

( Z : m = 50 : 50 )

(2) Polymer E + NLO compound

Polymer E as host molecule and N,N-dimethyl-4-nitroaniline as NLO compound were dissolved in phenol/tetrachloroethane mixed solvent (weight ratio 50/50) in a ratio of 80% to 20% to prepare a homogeneous solution. Then, the solvent was evaporated from this solution to produce a cast film. This cast film was sandwiched between two sheets of glass attached with transparent electrodes, interposing with a spacer of Kapton film of 100 μm, and by heating at 180°C and extending slowly in molten state, the polymer was closely adhered onto the electrodes. Then, maintaining the temperature at 180°C 4 kV/cm of direct current electric field was applied to orientate and a sample was obtained after rapid cooling and solidification. $Nd^{3+}$/YAG laser light was radiated on the resulting sample to examine a nonlinear optical response of the film, so that the generation of the second higher harmonics (λ=0.53μm) was observed.

**Claims**

1. A nonlinear optical material comprising a chiral smectic C liquid crystalline polyester consisting essentially of structural units having the general formulae (A), (B) and (C);
   (A)

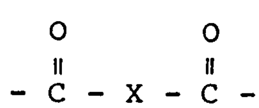

40-60 mol%

Wherein X is a structural unit selected from the group consisting of

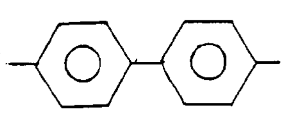 , 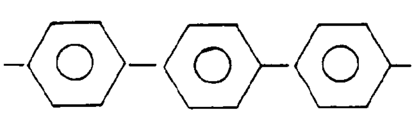 ,

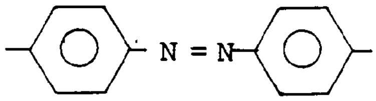 , 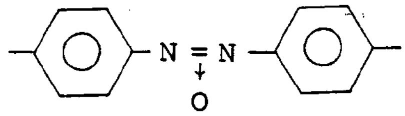 ,

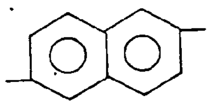 , 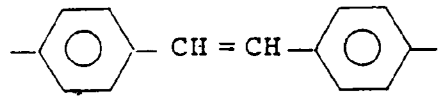 ,

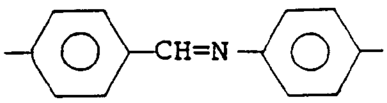 , 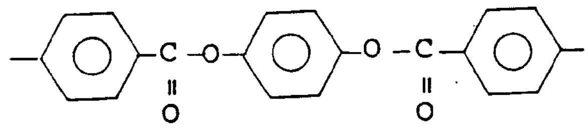 ,

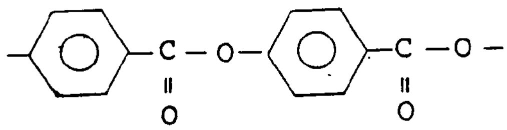

and

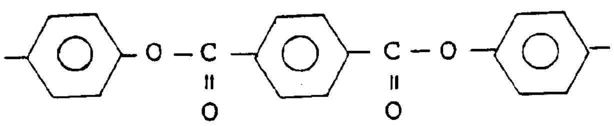 ,

(B)

$$-O-Y-O-$$

1-60 mol %

Wherein Y is a group having at least one optically active carbon and the total carbon number of Y is 3-12.

(C)

$$-O-(-CH_2-)_nO-$$

0-50 mol %

Wherein n is an integer of 2-10, with the proviso that when X is biphenyl, Y is not derived from 2-methyl-1,4-butanediol, 2-ethyl-1,4-butanediol, 2-propyl-1,4-butanediol or a derivative thereof.

**2.** A nonlinear, optical material according to claim 1, further comprising a compound exerting a nonlinear optical response.

**3.** A nonlinear optical material according to claim 2 wherein the compound exerting a nonlinear optical response is a compound with a secondary molecular susceptibility larger than 1 x $10^{-30}$ esu.

**4.** A nonlinear optical material according to claim 3 wherein the compound is selected from the group consisting of urea derivatives, enone derivatives, nitroaniline derivatives, heterocyclic compounds, stilben derivatives and merocyanines.

**5.** A nonlinear optical material according to any one of claims 1 to 4 wherein the structural unit (A) content is 45 to 55 mol %, the structural unit (B) content is 10 to 50 mol % and the structural unit (C) content is 5 to 40 mol %, respectively, based on the polyester.

**6.** A nonlinear optical material according to any one of claims 1 to 5 wherein the difference in amount between the R-isomer and S-isomer of the structural unit (B) is at least 1%.

7. A nonlinear optical material according to any one of claims 1 to 6 wherein the structural unit (A) is a structural unit selected from the group consisting of:-

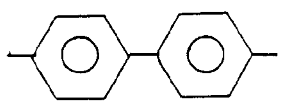 , 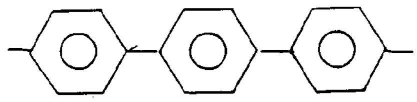 ,

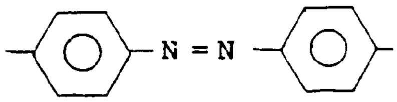 , 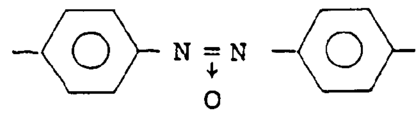 ,

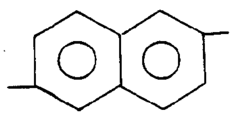 and 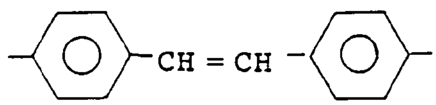 .

8. A nonlinear optical material according to any one of claims 1 to 7 wherein the structural unit (B) is a structural unit having the general formula

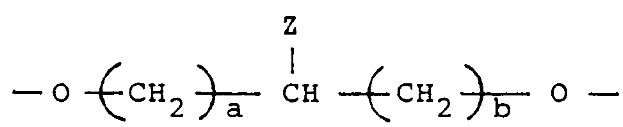

wherein each of a and b is an integer of 0-10, the sum of a and b is in the range of 2-11, a does not equal b, and Z is $C_{1-3}$ alkyl, F, Cl or Br.

9. A nonlinear optical material according to any one of claims 1 to 8 wherein n in the structural unit (C) is an integer of 4 to 8.

10. A process for producing a nonlinear optical material which comprises maintaining a composition as claimed in any one of claims 1 to 9 within a temperature range at which the composition exhibits chiral smectic C phase for 1 minute to 20 hours and applying a shearing force to the composition in the form of film so as to orient the molecules parallel with the film surface and then cooling the composition.

## Patentansprüche

1. Nichtlinear optisches Material mit einem Gehalt an chiralem, smektisch C flüssigkristallinen Polyester, der im wesentlichen aus Struktureinheiten der allgemeinen Formeln (A), (B) und (C) besteht, wobei

(A)

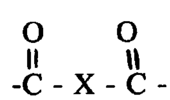

darstellt und in einer Menge von 40-60 Mol-% vorliegt,
wobei X eine Struktureinheit ausgewählt aus der aus

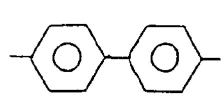 , 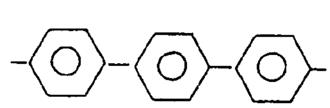 ,

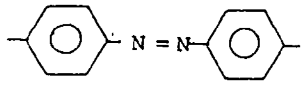 , 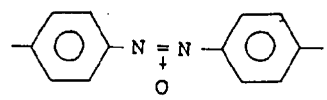 ,

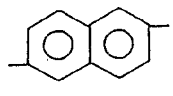 , 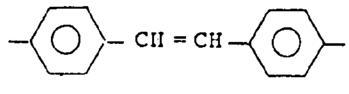 ,

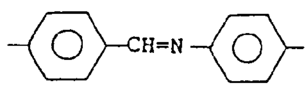 , 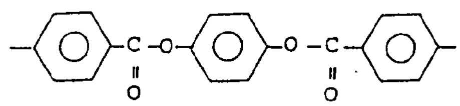 ,

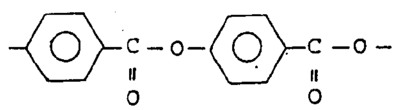

und

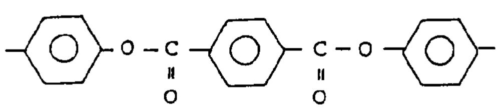 ,

bestehenden Gruppe ist,
(B)

$$-O-Y-O-$$

darstellt,
worin Y eine Gruppe mit mindestens einem optisch aktiven Kohlenstoffatom ist und die gesamte Anzahl an Kohlenstoffen von Y 3-12 beträgt, und in einer Menge von 1-60 Mol-% vorliegt, und
(C)

$$-O-(-CH_2-)_n-O-$$

darstellt,
worin n eine ganze Zahl von 2-10 ist, und in einer Menge von 0-50 Mol-% vorliegt,
unter der Maßgabe, daß dann, wenn X Biphenyl ist, Y nicht von 2-Methyl-1,4-butandiol, 2-Ethyl-1,4-butandiol, 2-Propyl-1,4-butandiol oder einem Derivat davon abgeleitet ist.

2. Nichtlinear optisches Material gemäß Anspruch 1, das zusätzlich eine optische Verbindung umfaßt, die sich nichtlinear optisch verhält.

3. Nichtlinear optisches Material gemäß Anspruch 2, bei dem die sich nichtlinear optisch verhaltende Verbindung eine Verbindung mit einer sekundären molaren Suszeptibilität von größer als $1x10^{-30}$ esE ist.

4. Nichtlinear optisches Material gemäß Anspruch 3, bei dem die Verbindung aus der aus Harnstoffderivaten, Enonderivaten, Nitroanilinderivaten, heterocyclischen Verbindungen, Stilbenderivaten und Merocyaninen bestehenden Gruppe ausgewählt ist.

5. Nichtlinear optisches Material gemäß einem der Ansprüche 1 bis 4, bei dem der Gehalt an der Struktureinheit (A) 45 bis 55 Mol-%, der Gehalt an Struktureinheit (B) 10 bis 50 Mol-% und der Gehalt an Struktureinheit (C) 5 bis 40 Mol-%, jeweils bezogen auf den Polyester, beträgt.

6. Nichtlinear optisches Material gemäß einem der Ansprüche 1 bis 5, bei dem der Mengenunterschied zwischen dem R- und dem S-Isomer der Struktureinheit (B) mindestens 1 % beträgt.

7. Nichtlinear optisches Material gemäß einem der Ansprüche 1 bis 6, bei dem die Struktureinheit eine aus der aus

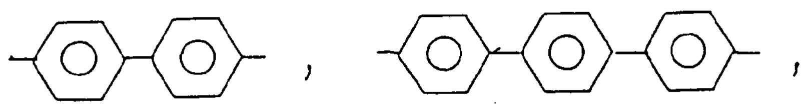

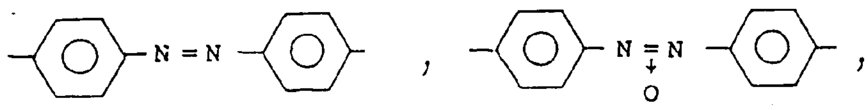

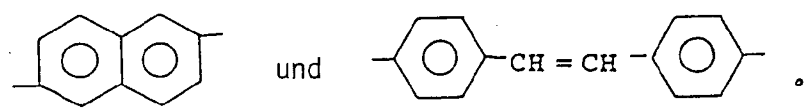

bestehenden Gruppe ausgewählte Struktureinheit ist.

8. Nichtlinear optisches Material gemäß einem der Ansprüche 1 bis 7, bei dem die Struktureinheit (B) eine Struktureinheit der allgemeinen Formel

$$-O-(-CH_2-)_a-\overset{Z}{\overset{|}{C}H}-(-CH_2-)_b-O-$$

darstellt, worin
a und b jeweils ganze Zahlen von 0-10 sind,
die Summe von a und b in einem Bereich von 2-11 liegt,
a ungleich b ist und
Z $C_{1-3}$-Alkyl, F, Cl oder Br ist.

9. Nichtlinear optisches Material gemäß einem der Ansprüche 1 bis 8, bei dem n in der Struktureinheit (C) eine ganze Zahl von 4 bis 8 ist.

10. Verfahren zur Herstellung eines nichtlinear optischen Materials, welches die Schritte umfaßt, daß man eine Zusammensetzung gemäß einem der Ansprüche 1 bis 9 für 1 Minute bis 20 Stunden innerhalb eines Temperaturbereiches, in dem die Zusammensetzung eine chirale, smektische C Phase aufweist, hält und auf die in Form eines Films vorliegende Zusammensetzung eine Scherkraft einwirken läßt, um die Moleküle parallel zur Filmoberfläche zu orientieren, und anschließend die Zusammensetzung abkühlt.

## Revendications

1. Matériau pour optique non linéaire, comprenant un polyester à cristal liquide smectique C chiral constitué essentiellement d'unités structurelles ayant les formules générales (A), (B) et (C) ;
(A)

$$-\overset{O}{\overset{\|}{C}}-X-\overset{O}{\overset{\|}{C}}-$$

40-60 mol%
dans laquelle X est une unité structurelle choisie dans le groupe composé de

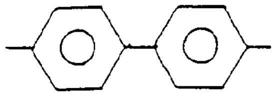 , 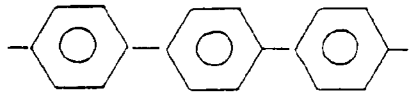 ,

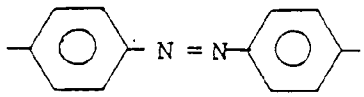 , 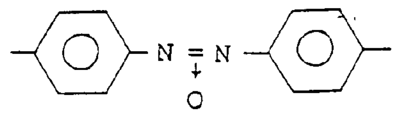 ,

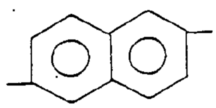 , 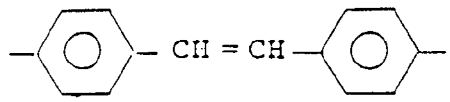 ,

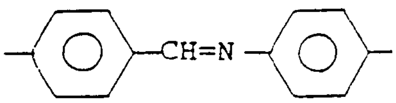 , 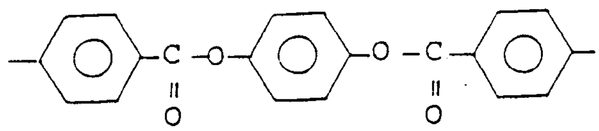 ,

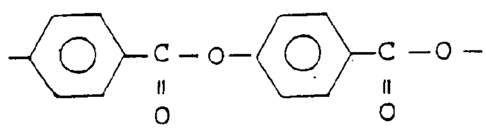

et

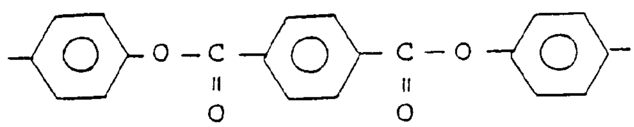 ,

(B)

$$-O-Y-O-$$

1-60 mol %

dans laquelle Y est un groupe ayant au moins un carbone optiquement actif et le nombre total de carbones de Y est de 3 à 12 ;

(C)

$$-O-(-CH_2-)-_nO-$$

0-50 mol %

dans laquelle n est un entier de 2 à 10, avec la condition que, lorsque X est biphényle, Y n'est pas obtenu à partir de 2-méthyl-1,4-butanediol, 2-éthyl-1,4-butanediol, 2-propyl-1,4-butanediol ou d'un de leurs dérivés.

2. Matériau pour optique non linéaire suivant la revendication 1, comprenant en outre un composé produisant une réponse optique non linéaire.

3. Matériau pour optique non linéaire suivant la revendication 2, dans lequel le composé produisant une réponse optique non linéaire est un composé ayant une susceptibilité moléculaire secondaire supérieure à $1 \times 10^{-30}$esu.

4. Matériau pour optique non linéaire suivant la revendication 3, dans lequel le composé est choisi dans le groupe comprenant les dérivés d'urée, les dérivés d'énone, les dérivés de nitroaniline, les composés hétérocycliques, les dérivés de stilbène et les merocyanines.

5. Matériau pour optique non linéaire suivant une quelconque des revendications 1 à 4, dans lequel la teneur en unités structurelles (A) est de 45 à 55 mol %, la teneur en unités structurelles (B) est de 10 à 50 mol % et la teneur en unités structurelles (C) est de 5 à 40 mol %, respectivement, rapportées au polyester.

6. Matériau pour optique non linéaire suivant une quelconque des revendications 1 à 5, dans lequel la différence de quantité entre l'isomère R et l'isomère S de l'unité structurelle (B) est au moins de 1%.

7. Matériau pour optique non linéaire suivant l'une quelconque des revendications 1 à 6, dans lequel l'unité structurelle (A) est une unité structurelle choisie dans le groupe comprenant

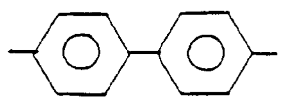 , 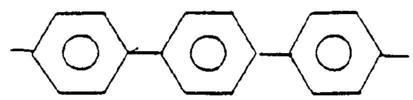 ,

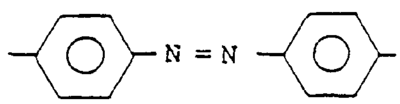 , 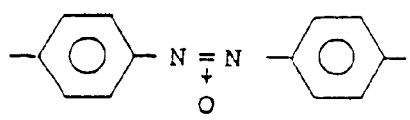 ,

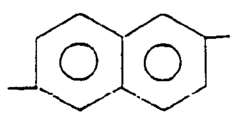 et 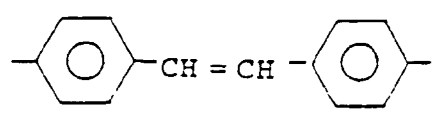

8. Matériau pour optique non linéaire suivant une quelconque des revendications 1 à 7, dans lequel l'unité structurelle (B) est une unité structurelle ayant la formule générale

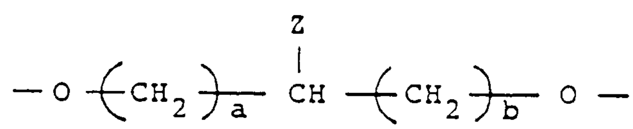

dans laquelle chacun de a et b est un entier de 0 à 10, la somme de a et b est dans la plage de 2 à 11, a n'est pas égal à b, et Z est un $C_{1-3}$ alkyle, F, Cl ou Br.

9. Matériau pour optique non linéaire suivant une quelconque des revendications 1 à 8, dans lequel n dans l'unité structurelle (C) est un entier de 4 à 8.

10. Procédé de fabrication d'un matériau pour optique non linéaire, qui comprend le maintien d'une composition suivant une quelconque des revendications 1 à 9 dans une plage de température dans laquelle la composition comporte une phase smectique C chirale, pendant 1 minute à 20 heures, et l'application d'une force de cisaillement à la composition sous forme de film,de façon à orienter les molécules parallèlement à la surface du film, puis le refroidissement de la composition.